(19) Europäisches Patentamt
European Patent Office
Office européen des brevets

(11) Veröffentlichungsnummer: **0 024 672**
**A1**

(12) **EUROPÄISCHE PATENTANMELDUNG**

(21) Anmeldenummer: **80104913.1**

(22) Anmeldetag: **19.08.80**

(51) Int. Cl.³: **C 08 G 63/62**
C 08 G 63/64

(30) Priorität: **31.08.79 DE 2935317**

(43) Veröffentlichungstag der Anmeldung:
**11.03.81 Patentblatt 81/10**

(84) Benannte Vertragsstaaten:
**DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Schreckenberg, Manfred, Dr.**
**Doerperhofstrasse 15**
**D-4150 Krefeld(DE)**

(72) Erfinder: **Burgdörfer, Hans-Heribert, Dr.**
**Goffineweg 49**
**D-5000 Köln 80(DE)**

(72) Erfinder: **Dhein, Rolf, Dr.**
**Deswatinesstrasse 30**
**D-4150 Krefeld 1(DE)**

(72) Erfinder: **Schneider, Gottfried, Dr.**
**Paul-Klee-Strasse 62**
**D-5090 Leverkusen(DE)**

(54) **Hochmolekulare, segmentierte, thermoplastisch verarbeitbare, aromatische Polycarbonate mit einkondensierten Dimerfettsäureestern, ihre Herstellung und ihre Verwendung.**

(57) Gegenstand der vorliegenden Erfindung sind hochmolekulare, segmentierte, thermoplastisch verarbeitbare aromatische Polycarbonate miteeinkondensierten Dimerfettsäureester-Segmenten, ihre Herstellung und ihre Verwendung als Verpackungsfolien für biologische Flüssigkeiten oder als Folien in der Elektroindustrie.

EP 0 024 672 A1

Croydon Printing Company Ltd

BAYER AKTIENGESELLSCHAFT 5090 Leverkusen, Bayerwerk
Zentralbereich
Patente, Marken und Lizenzen PS-byc 30. Aug. 1979

Hochmolekulare, segmentierte, thermoplastisch verarbeitbare, aromatische Polycarbonate mit einkondensierten Dimerfettsäureestern, ihre Herstellung und ihre Verwendung

Gegenstand der vorliegenden Erfindung sind hochmolekulare, segmentierte, thermoplastisch verarbeitbare, aromatische Polycarbonate mit einem Gehalt an aromatischen Carbonatstruktureinheiten zwischen etwa 30 Gew.-% und 99 Gew.-%, bezogen jeweils auf Gesamtgewicht an Polycarbonat, die dadurch gekennzeichnet sind, daß der jeweils zu 100 Gew.-% komplementäre Gewichtsanteil aus einkondensierten Dimerfettsäureester-Segmenten mit mittleren Molekulargewichten $\bar{M}n$ (Zahlenmittel) zwischen 800 und 20 000, vorzugsweise zwischen 1000 und 15000 und insbesondere zwischen 2000 und 10000 besteht. Besondere Gewichtsanteile an aromatischen Carbonatstruktureinheiten liegen von 30 Gew.-% bis 95 Gew.-% einerseits und von 95,1 Gew.-% bis 99 Gew.-% andererseits, bevorzugte Gewichtsanteile an aromatischen Carbonatstruktureinheiten liegen zwischen 35 Gew.-% und 80 Gew.-% einerseits und zwischen 96 Gew.-% und 99 Gew.-% andererseits, bezogen jeweils auf Gesamtgewicht an Polycarbonat-Elastomer, bestehend aus



BAD ORIGINAL

aromatischen Carbonatstruktureinheiten und einkondensierten Dimerfettsäureester-Segmenten.

Gegenstand der vorliegenden Erfindung ist außerdem ein Verfahren zur Herstellung dieser aromatischen Polycarbonate, das dadurch gekennzeichnet ist, daß man nach den bekannten Polycarbonat-Herstellungsverfahren in Lösung Diphenole, Kohlensäurehalogenide gegebenenfalls unter Mitverwendung von Kettenabbrechern und gegebenenfalls unter Mitverwendung von Verzweigern, mit Dimerfettsäureestern mit mittleren Molekulargewichten ($\bar{M}n$) zwischen 800 und 20 000, vorzugsweise zwischen 1000 und 15000 und insbesondere zwischen 2000 und 10000, gegebenenfalls nach vorheriger Umwandlung in eine unter den Bedingungen der Polycarbonat-Herstellung einkondensierbare Form, umsetzt.

Gegenstand der Erfindung ist außerdem die Modifizierung von hochmolekularen, thermoplastischen, aromatischen Polycarbonaten durch Einbau von Weichsegmenten, die dadurch gekennzeichnet ist, daß man Dimerfettsäureester-Weichsegmente verwendet.

Gegenstand der vorliegenden Erfindung sind außerdem aromatische, thermoplastisch verarbeitbare, hochmolekulare, segmentierte Polycarbonate, die dadurch gekennzeichnet sind, daß sie mindestens ein Dimerfettsäureester-Weichsegment einkondensiert enthalten.

Gegenstand der vorliegenden Erfindung sind außerdem Dimerfettsäureester mit Hydroxyarylcarbonat-Endgruppen der Formel (II)



BAD ORIGINAL

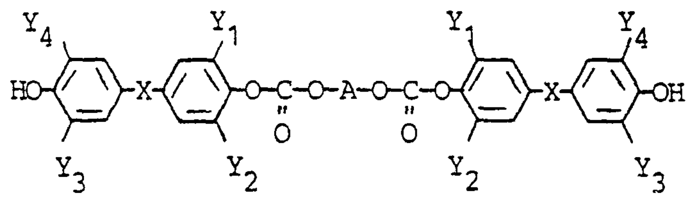 (II) ,

worin

-O-A-O- der bivalente Diolat-Rest von aliphatisch Hydroxyl-terminierten Dimerfettsäureestern mit $\bar{M}n$ (Zahlenmittel des Molekulargewichts) von 800 bis 20 000, vorzugsweise von 1000 bis 15000 und insbesondere von 2000 bis 10000 ist,

X eine Einfachbindung, $-CH_2-$, 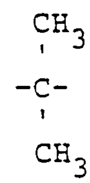 , 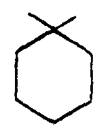 ,-O-, -S-, $-SO_2-$, 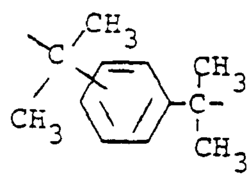 ist und

$Y_1$ bis $Y_4$ gleich oder verschieden sind, und Wasserstoff, $C_1$-$C_4$-Alkyl, vorzugsweise Methyl oder Halogen, vorzugsweise Chlor oder Brom, bedeuten.

Gegenstand der vorliegenden Erfindung ist außerdem die Verwendung der erfindungsgemäßen Polycarbonate als Verpackungsfolien für biologische Flüssigkeiten und Parenteralia - einerseits, welche für die erfindungsgemäßen Polycarbonat-Elastomeren mit Gewichtsanteilen an aromatischen Carbonatstruktureinheiten von 30 Gew.-% bis 95 Gew.-%, vorzugsweise zwischen 35 Gew.-% und 80 Gew.-% in Frage kommt.



BAD ORIGINAL

Für die erfindungsgemäßen Polycarbonate mit Gewichtsanteilen an aromatischen Carbonatstruktureinheiten von 95,1 Gew.-% bis 99 Gew.-%, vorzugsweise zwischen 96 Gew.-% bis 99 Gew.-% liegen die technischen Verwendungen andererseits vorwiegend zum Beispiel bei Folien, Platten und Formkörpern in der Elektroindustrie.

Thermoplastisch verarbeitbare, hochmolekulare, segmentierte aromatische Polycarbonat-Elastomere mit den verschiedensten Weichsegmenten und ihre Herstellung sind bekannt (siehe beispielsweise US-PS 3 161 615, US-PS 3 030 335, US-PS 3 287 442, US-PS 3 189 662, US-PS 3 169 121, DT-AS 1 162 559, DE-OS 2 411 123, DE-OS 2 636 783 (Le A 16 689), DE-OS 2 702 626 (Le A 17 356), DE-OS 2 636 784 (Le A 17 025), DE-OS 2 726 416 (Le A 18 033) DE-OS 2 726 376 (Le A 18 015), DE-OS 2 726 417 (Le A 18 034) und Deutsche Patentanmeldung P 28 27 325 (Le A 18 819).

Die Produkte sind thermoplastisch verarbeitbar und besitzen aufgrund der Weichsegmentanteile aus aliphatischen Polyethern, aliphatischen Polyestern, aliphatischen Polycarbonaten oder Polysiloxanen eine gute Elastizität. Die Elastizität dieser Produkte ist abhängig von dem Mengenverhältnis des aromatischen Polycarbonat-Hartsegments zu dem aliphatischen Weichsegment, wobei mit steigendem Weichsegmentanteil die Elastizität und die Reißdehnung zunimmt. Weiterhin besitzen diese Produkte eine gute Wärmeformbeständigkeit durch kristalline aromatische Polycarbonatbereiche, die dem Polymer eine gute physikalische Vernetzungsdichte, verbunden mit guter Wärmeformbeständigkeit, selbst bei höheren Temperaturen geben. Es können außerdem auf Basis dieser



BAD ORIGINAL

Polycarbonat-Elastomeren auch Produkte hergestellt werden, deren vergleichsweise geringere Wärmeformbeständigkeit durch eine reine amorphe Phasentrennung vom Hartsegment zum Weichsegment verursacht wird.

Nachteilig bei fast all diesen Produkten ist, daß die aromatischen Polycarbonat-Hartsegmente, die dem Polymer durch Phasentrennung die Wärmeformbeständigkeit geben, nach thermoplastischer Verarbeitung nicht ausreichend schnell genug phasengetrennt vorliegen. Dadurch neigen die Produkte zum Verkleben (Blocken).

Das Kleben kann zwar durch ein aufwendiges Verarbeitungsverfahren beseitigt werden, so beispielsweise durch Tempern oder durch Verstrecken und Tempern nach einer thermplastischen Verarbeitung. Somit ist die Gewinnung klebfreier Produkte noch mit einem erheblichen Arbeitsaufwand verbunden.

Ganz überraschend wurde jedoch gefunden, daß bei aromatischen Polycarbonat-Elastomeren, die mindestens 5 Gew.-% Dimerfettsäureester als Weichsegmente einkondensiert enthalten, das Kleben nach der thermoplastischen Verarbeitung nicht mehr vorhanden ist. Besonders überraschend ist jedoch, daß diese Produkte sofort nach thermoplastischer Verarbeitung mit guter Kälteflexibilität phasengetrennt vorliegen. Unter Erhalt der Transparenz war eine solch gezielte Phasentrennung von aromatischen Polycarbonatsegmenten beispielsweise auf Basis von Bisphenol A-Polycarbonat und einem Polyester auf Basis von Hexandiol-1.6 und Dimerfettsäure bislang nicht bekannt.



BAD ORIGINAL

Die Herstellung von Polyester-Polycarbonaten aus Dimerfettsäure, Bisphenol A und Phosgen nach dem Pyridinverfahren ist an sich bekannt und in US-PS 3 169 121 Seite 9, Beispiel 17, beschrieben.

Im Gegensatz zu den erfindungsgemäßen Polycarbonat-Elastomeren sind die Produkte gemäß US-PS 3 169 121 nur aus den Dimerfettsäureblöcken mit Molekulargewichten von 560 aufgebaut.

Die erfindungsgemäßen Polycarbonate mit einkondensierten Dimerfettsäureestern enthalten jedoch Polyesterblöcke mit Molekulargewichten (Zahlenmittel $\bar{M}n$) von 800 bis 20000, vorzugsweise 1000 bis 15000, insbesondere von 2000 bis 10000, aus Dimerfettsäuren und Diolen, und liegen phasengetrennt vor, was erst ihre Brauchbarkeit für die erfindungsgemäße Anwendung ermöglicht.

Die erfindungsgemäßen Polycarbonate mit einkondensierten Dimerfettsäureestern von mindestens 5 Gew.-% können durch thermoplastische Verarbeitung zu transparenten Folien verarbeitet werden, aus denen durch Wärmeimpulsschweißung Beutel für Verpackungen von biologischen Flüssigkeiten und Parenteralia hergestellt werden. Diese Beutel besitzen eine solch hohe Wärmeformbeständigkeit, daß sie in einem Autoklaven bei 121°C mit Wasserdampf sterilisiert werden können.



BAD ORIGINAL

Für die Herstellung der erfindungsgemäßen hochmolekularen Polycarbonat-Elastomere sind alle Diphenole geeignet, beispielsweise

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
α,α-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 271 367 und 2 999 846 und in den deutschen Offenlegungsschriften 2 063 050, 2 211 957 aufgeführt.

Erfindungsgemäß einsetzbare Diphenole sind insbesondere solche der Formel (I)

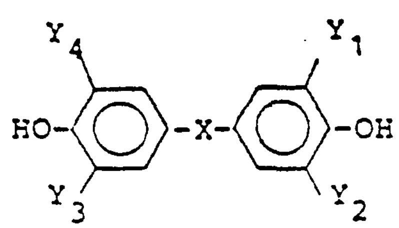

(I) ,



BAD ORIGINAL

worin

X eine Einfachbindung $-CH_2-$, 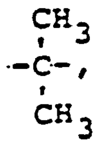, 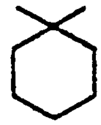, O, S, $SO_2$

oder 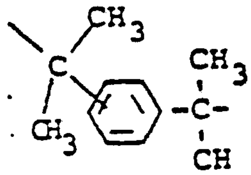 bedeuten und

$Y_1$ bis $Y_4$ gleich oder verschieden sind, und Wasserstoff $C_1$-$C_4$-Alkyl, vorzugsweise Methyl, oder Halogen, vorzugsweise Chlor oder Brom

bedeuten.

Geeignete Diphenole sind beispielsweise

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-Dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.



BAD ORIGINAL

Bevorzugte Diphenole sind beispielsweise

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Die geeigneten Diphenole können sowohl allein als auch zu mehreren eingesetzt werden.

Neben den aromatischen Diphenolen können zur Herstellung der erfindungsgemäßen Polycarbonate mit einkondensierten Dimerfettsäureestern die bekannten Verzweiger mit drei oder mehr als drei funktionellen Gruppen, insbesondere solche mit drei oder mehr als drei phenolischen Hydroxylgruppen eingesetzt werden, wobei die üblicherweise bekannten Mengen an Verzweiger zwischen 0,05 und 2 Mol-%, bezogen auf eingebaute Diphenole, einzuhalten sind. Die Herstellung verzweigter Polycarbonate ist beispielsweise in den DT-OS 1 570 533 und DT-OS 1 595 762 sowie in dem US-PS 3 544 514 bzw. US-RE 27682 beschrieben.

Als Kettenabbrecher sind die üblicherweise gebräuchlichen Phenole wie beispielsweise p-tert.-Butylphenol, p-Chlorphenol, 2,4,6-Tribromphenol und Phenol in den üblichen Mengen einsetzbar, die sich nach dem jeweils einzustellenden Molekulargewicht der erfindungsgemäßen Polycarbonat-Elastomeren bestimmt.



BAD ORIGINAL

Erfindungsgemäß als Segmente geeignete Dimerfettsäureester sind aliphatisch Hydroxyl- oder aliphatisch Carboxyl-terminierte Polyester erhältlich aus Dimerfettsäure mit einem Molekulargewicht (Zahlenmittel) $\bar{M}n$ von etwa 300 bis 800, vorzugsweise 500 bis 600, und einem Diol, wobei die hydroxylterminierten Polyester durch Überschuß an Diol gegenüber der Dimerfettsäure und die carboxylterminierten Polyester durch Unterschuß an Diol gegenüber der Dimerfettsäure in bekannter Weise erhältlich sind, beispielsweise in Gegenwart von Veresterungskatalysatoren und Temperaturen zwischen 150° und 200° und Reaktionszeiten zwischen 20 h und 50 h. Die erfindungsgemäß geeigneten Dimerfettsäureester haben mittlere Molekulargewichte (Zahlenmittel) $\bar{M}n$ von 800 bis 20000, vorzugsweise von 1000 bis 15000 und insbesondere von 2000 bis 10000.

Durch das jeweilige Reaktantenverhältnis von Diol zu Dimerfettsäure wird jeweils das gewünschte Molekulargewicht der Dimerfettsäureester in bekannter Weise geregelt.

Unter Dimerfettsäure versteht man das Dimerisationsprodukt von ungesättigten Fettsäuren ($C_{18}$) wie Öl-, Linol- und Linolensäure. Die Herstellung und die Struktur der dimerisierten Fettsäure wird in J. Am. Chem. Soc. 66, 84 (1944) und in US-PS 2 347 562 beschrieben. Geeignet sind Dimerfettsäuren verschiedener Qualitäten, wie sie auf dem Markt angeboten werden, und die sich hinsichtlich des Grades an Ungesättigkeit und Monomer- und Trimergehalt unterschieden. Die bevorzugten handelsüblichen Dimerfettsäurezusammensetzungen sind praktisch frei von Monomer- und Trimerfraktionen und vollständig gesättigt. Vorzugsweise geeignet ist eine hydrierte Dimerfettsäure, die z.B. durch Dimerisierung von Ölsäure und anschließender Hydrierung hergestellt wird. Es können für diesen Anwendungszweck auch Gemische aus Dimerfettsäuren und Trimerfettsäuren verwendet werden.

Als zweiwertige Alkohole kommen, gegebenenfalls, im Gemisch miteinander, beispielsweise Ethylenglykol, 1,2- und 1,3-Propylenglykol, 1,2-, 2,3-, 1,3- und 1,4-Butandiol, Pentandiole, Neopentylglykol, Hexandiole z.B. 1,6-Hexandiol, Trimethylhexandiole, 1,8-Octandiole, Decandiole, Dodecandiole, Octadecandiole, 2,2-Dimethyl-1,3-propandiol-2,2-dimethyl-3-hydroxypropionat, Diethylenglykol, Triethylenglykol, Tetraethylenglykol, Dipropylenglykol, Tripropylenglykol, Tetrapropylenglykol, 1,4-Cyclohexandimethanol, 1,1-Cyclohexan-dimethanol, Perhydrobisphenole z.B. 4,4'-(1-Methylethyliden)-bis-cyclohexanol, 2,2-Bis-(4-(2-hydroxyethoxy)-phenyl)-propan in Frage.

Auch mehrwertige Alkohole können mitverwendet werden wie beispielsweise Glycerin, 1,2,4-Butantriol, Trimethylolethan, Trimethylolpropan, Trimethylolbutan, Pentaerythrit, Tetrosen, Di- und Trimethylolpropan, Pentosen, 2,2,6,6-Tetrakis-(hydroxymethyl)-cyclohexan, Hexosen, Dipentaerythrit und Tri-pentaerythrit. Ferner kommen Ethylenoxid- bzw. Propylenoxidaddukte an solche Polyole, sofern dabei eine mittlere Zahl von 60 Kohlenstoffatomen pro Molekül nicht überschritten wird, Polyethylenglykole, Polypropylenglykole und Polybutylenglykole in Frage.

Die erfindungsgemäß geeigneten Dimerfettsäureester können soweit sie carboxylgruppen-terminiert sind, als solche bei der Polycarbonatherstellung nach den bekannten Lösungsverfahren, also beispielsweise nach dem Phasengrenzflächenverfahren (siehe dazu DE-OS 2 636 783) (Le A 16 689) oder nach dem sogenannten "Pyridinverfahren" eingesetzt werden.

Die erfindungsgemäß geeigneten, hydroxylgruppen-terminierten Dimerfettsäureester können als solche nur nach dem "Pyridinverfahren" für die Polycarbonatherstellung unmittelbar eingesetzt werden. (Siehe beispielsweise Journal of Polymer Science Teil e, Polymer Symposia, Nr. 4, 1963, Teil 1, Seiten 707 bis 730). Für die Polycarbonatherstellung nach dem Phasengrenzflächenverfahren müssen die hydroxylgruppen-terminierten Dimerfettsäureester entweder in solche mit Hydroxyarylcarbonat-Endgruppen übergeführt werden (siehe dazu beispielsweise DE-OS 2 726 376 (Le A 18 015) sowie deutsche Patentanmeldungen P 28 27 325 (Le A 18 819) und P 28 27 526 (Le A 18 995)) oder in die entsprechenden Bischlorkohlensäureester (siehe dazu beispielsweise DT-AS 1 162 559). Die Dimerfettsäureester mit Hydroxyaryl-carbonat-Endgruppen oder mit Chlorkohlensäureesterendgruppen können natürlich auch für die Polycarbonatherstellung nach dem "Pyridinverfahren" eingesetzt werden.

Für die erfindungsgemäße Herstellung der erfindungsgemäßen Polycarbonate können die erfindungsgemäß geeigneten carboxylgruppen-terminierten Dimerfettsäureester auch in Form der entsprechenden Carbonsäurehalogenide, insbesondere Carbonsäurechloride eingesetzt werden.

Die Überführung der carboxylgruppen-terminierten Dimerfettsäureester in die entsprechenden Carbonsäurechloride kann mit den üblichen Mitteln wie beispielsweise Thionylchlorid, $PCl_3$, $PCl_5$ etc. in bekannter Weise erfolgen (siehe dazu "Organikum",VEB Deutscher Verlag der Wissenschaften, Berlin 1967, 7. Auflage, Seiten 466 bis 467).

Erfindungsgemäß geeignete Dimerfettsäureester mit Hydroxyarylcarbonat-Endgruppen sind beispielsweise die folgenden der idealisierten Formeln (II) bis (IIi), worin -O-A-O- der bivalente Diolat-Rest der erfindungsgemäß geeigneten, aliphatisch Hydroxyl-terminierten Dimerfettsäureester mit $\bar{M}n$ (Zahlenmittel) von 800 bis 20000, vorzugsweise von 1000 bis 15000 und insbesondere von 2000 bis 10000 ist. In Formel (II) haben X und $Y_1$ bis $Y_4$ außerdem die Bedeutung gemäß Formel (I).

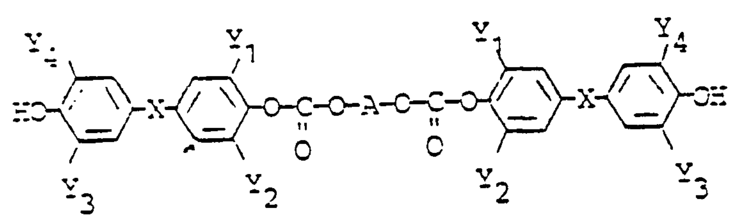

(II)



BAD ORIGINAL

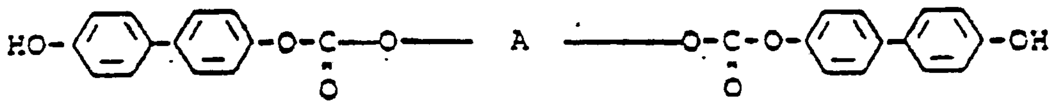

(IIa)

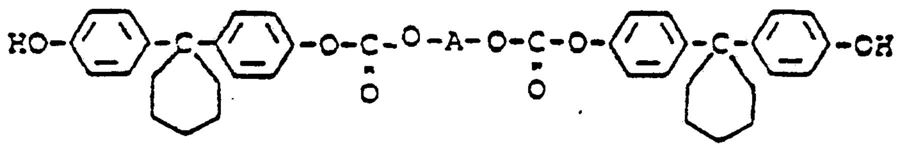

(IIb)

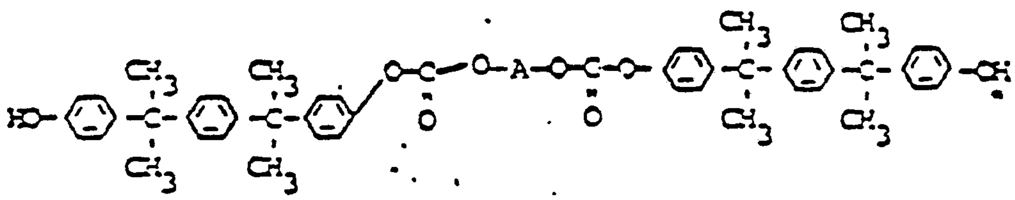

(IIc)

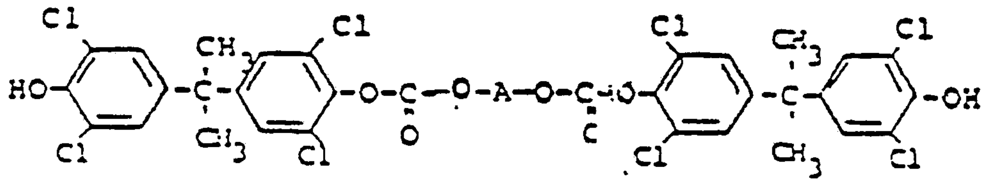

(IId)

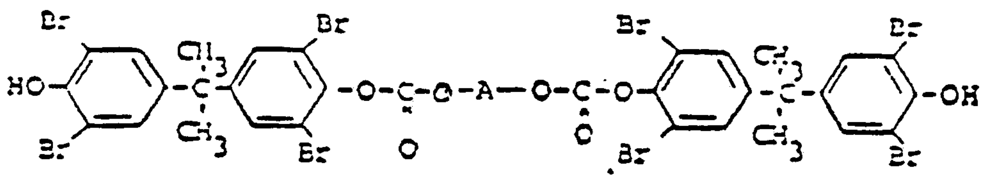

(IIe)

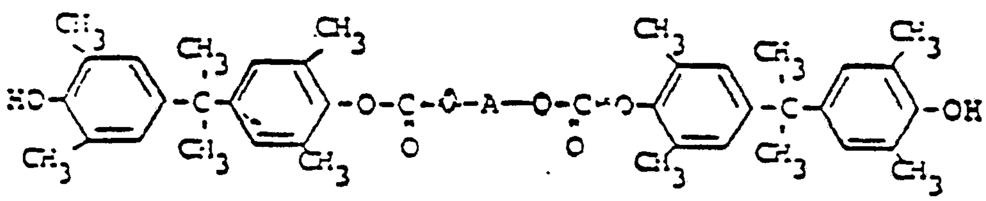

(IIf)

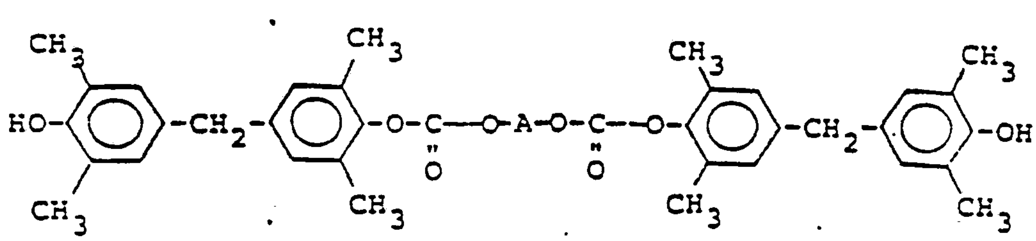

(IIg)

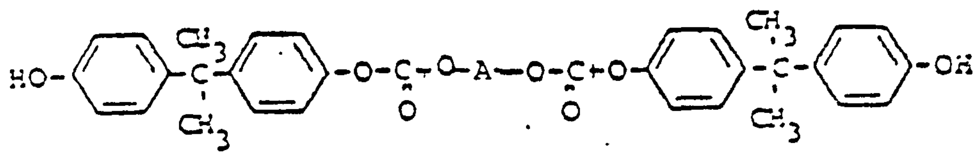 (IIh)

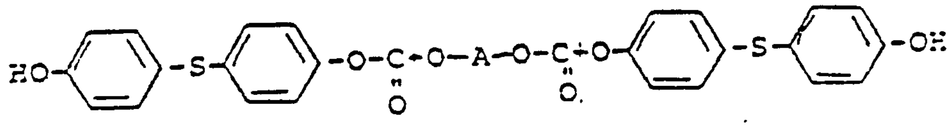 (IIi)

Gemäß der deutschen Patentanmeldung P 28 27 325 (Le A 18 819) können auch erfindungsgemäß geeingete, aliphatische Hydroxyl-terminierte Dimerfettsäureester mit zweiwertigen Alkoholen, beispielsweise mit denen von Seite 11 , mit Bisphenolen und Diphenylcarbonat zu erfindungsgemäß geeigneten Dimerfettsäureestern mit Hydroxyarylcarbonat-Endgruppen umgesetzt werden, die zusätzliche aliphatische Carbonatgruppen enthalten.

Die Herstellung der erfindungsgemäßen Polycarbonate kann im wesentlichen nach folgenden zwei bekannten Verfahren (vgl. H. Schnell, Chemistry and Physics of Polycarbonates, Polymer Rev., Vol. IX, Seiten 27 ff., Interscience Publishers) erfolgen, die im folgenden kurz beschrieben werden.

1. Herstellung eines erfindungsgemäßen Polycarbonates in heterogener Phase (Phasengrenzflächenverfahren).

Hierbei werden Diphenole, gegebenenfalls mit monophenolischen Kettenabbrechern und gegebenenfalls mit tri- oder tetrafunktionellen Verzweigern in wäßriger alkalischer Phase gelöst. Nach Zugabe des aliphatisch carboxyl-terminierten oder des hydroxyarylcarbonat-terminierten Dimerfettsäureesters in einem für das Polycarbonat geeigneten Lösungsmittels entsteht ein zweiphasiges Gemisch, in das bei 0°C bis 60°C Phosgen eingeleitet wird. Nach Zugabe eines Katalysators werden hochmolekulare Polycarbonate mit einkondensierten Dimerfettsäureestern erhalten. Die Aufarbeitung erfolgt durch Waschen der abgetrennten organischen Phase bis zur Neutralität und anschließender Abdestillation des Lösungsmittels beispielsweise in Zweiwellenausdampfextrudern bei Temperaturen von 200° bis 250°.

Geeignete organische Lösungsmittel für die erfindungsgemäßen Polycarbonate sind die für die thermoplastischen Polycarbonate bekannten wie beispielsweise Methylenchlorid oder Chlorbenzol.

Geeignete basische Verbindungen für die Herstellung der wäßrigen alkalischen Phase sind Lösungen von LiOH, NaOH, KOH, $Ca(OH)_2$ und/oder $Ba(OH)_2$ in Wasser.

Geeignete Katalysatoren für die Polykondensation sind die für die Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden.

Die Menge an Katalysator variiert je nach eingesetztem Diphenol zwischen 0,2-5 Mol-%, bei Einsatz von tetramethylsubstituierten Diphenolen zwischen 5-10 Mol-%, bezogen jeweils auf die Gesamtmenge an eingesetzten Diphenolen des gesamten aromatischen Polycarbonatanteils in den Polycarbonat-Elastomeren.

Die Mengen an organischer Phase werden vorzugsweise so gewählt, daß die Reaktion in 5 bis 20 prozentiger organischer Lösung, vorzugsweise 10 bis 15 prozentiger organischer Lösung durchgeführt wird.

Die Mengen an wäßrig alkalischer Phase sind volumenmäßig vorzugsweise gleich der Menge der gesamten organischen Phase. Sie können volumenmäßig auch größer oder kleiner als die gesamten Mengen der organischen Phase sein.

Der pH-Wert der wäßrigen Phase liegt während der Reaktion zwischen pH 9-14, vorzugsweise zwischen pH 12-13.



BAD ORIGINAL

2. Herstellung eines erfindungsgemäßen Polycarbonates in homogener Phase (Pyridinverfahren).

Hierbei werden Diphenole, die erfindungsgemäß geeigneten Dimerfettsäureester, gegebenenfalls mit tri- oder tetrafunktionellen Verzweigern in einer organischen Base, wie beispielsweise Pyridin, das gegebenenfalls mit Methylenchlorid abgemischt ist, gelöst. Nach Zugabe eines für die entstehenden Polycarbonate geeigneten Lösungsmittels wird Phosgen bei einer Temperatur zwischen 0°C und 60°C eingeleitet. Das sich während der Reaktion bildende Pyridinhydrochlorid wird abfiltriert und die organische Phase mit verdünnter wäßriger HCl und anschließend mit Wasser neutral gewaschen. Die Aufarbeitung der organischen Lösung des Polycarbonats erfolgt gemäß dem unter 1. beschriebenen Verfahren.

Außer Pyridin sind als organische Basen Triethylamin, Dimethylanilin oder Tributylamin geeignet. Lösungsmittel für das erfindungsgemäße Polycarbonat sind die gemäß dem unter 1. beschriebenen Verfahren.

Die Mengen an organischer Phase werden so gewählt, daß Reaktionen in etwa 5 bis 20 prozentiger Lösung durchgeführt werden können.

Die Mengen an organischen Basen werden so gewählt, daß pro Mol eingesetztem Diphenol oder Phosgen mehr als 2 Mol Amin verwendet werden.



BAD ORIGINAL

Die jeweils einzusetzenden Reaktantenverhältnisse von Diphenol zu erfindungsgemäß einsetzbaren Dimerfettsäureestern richten sich nach dem zu erzielenden Gehalt an "Weichsegment"-Anteil aus Dimerfettsäureester-Einheiten und "Hartsegment"-Anteil aus aromatischen Carbonat-Einheiten, wobei normalerweise die quantitative Umsetzung der Reaktanten gegeben ist.

Als Carbonatspender für die erfindungsgemäße Herstellung der Polycarbonate dienen in bekannter Weise Kohlensäurehalogenide, insbesondere Kohlensäurechloride, wie beispielsweise Phosgen, $COBr_2$, oder die Bischlorkohlensäureester der Diphenole in entsprechender Menge, wobei jeweils pro Halogen-kohlensäure-Gruppe weniger als 1/2 Mol Diphenol verwendet werden.

Die erfindungsgemäßen Polycarbonate bestehen aus aromatischen Polycarbonatanteilen und Dimerfettsäureester-Segmenten, wobei mit steigendem aromatischem Polycarbonatanteil die Härte und Wärmeformbeständigkeit der erfindungsgemäßen Polykondensate zunimmt und die Elastizität und Reißdehnung abnimmt.



BAD ORIGINAL

Die erfindunsgemäßen Polycarbonate mit einkondensierten Dimerfettsäureester-Segmenten von mehr als etwa 5 Gew.-% können auch als Polycarbonat-Elastomere bezeichnet werden.

Als aromatischer Polycarbonatanteil der erfindungsgemäßen Polycarbonat-Elastomere ist die Gewichtsmenge an aromatischen Carbonatstruktureinheiten der folgenden Formel (III)

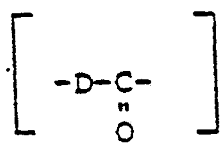

(III),

worin

D für die Diphenolat-Reste in Polycarbonat-Elastomer steht,

insbesondere jedoch an aromatischen Carbonatstruktureinheiten der Formel (IV), zu verstehen

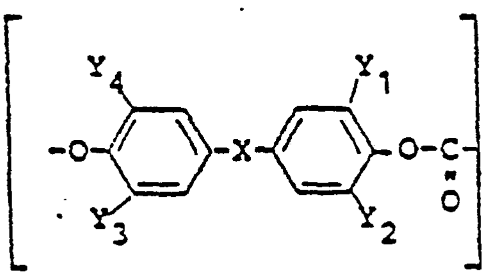

(IV),

worin



BAD ORIGINAL

X und $Y_1$ bis $Y_4$ die für die Formel (I) genannte Bedeutung haben.

Als Weichsegmentanteil der erfindungsgemäßen hochmolekularen, Polycarbonat-Elastomeren ist demzufolge die Gewichtsmenge an aliphatischen Carbonatstruktureinheiten (V) und Carboxylatstruktureinheiten (VI) der vereinfachten Formeln

$$\left[ -O-A-O-\overset{\overset{O}{\|}}{C}- \right] \quad (V)$$

$$\left[ -O-\overset{\overset{O}{\|}}{C}-A-\overset{\overset{O}{\|}}{C}-O- \right] \quad (VI)$$

zu verstehen, worin -O-A-O- der bivalente Diolat-Rest entsprechend Formel (II) bedeutet, und worin $-O-\overset{\overset{O}{\|}}{C}-A-\overset{\overset{O}{\|}}{C}-O-$ der bivalente Dicarboxylat-Rest der erfindungsgemäß geeigneten, aliphatischen Carboxyl-terminierten Dimerfettsäureester mit $\bar{M}n$ (Zahlenmittel) von 800 bis 20000, vorzugsweise 1000 bis 15000 und insbesondere von 2000 bis 10000 ist.

Gegenstand der vorliegenden Erfindung sind somit vorzugsweise hochmolekulare, segmentierte, thermoplastisch



BAD ORIGINAL

verarbeitbare, aromatische Polycarbonate auf Basis von einkondensierten Dimerfettsäureester-Segmenten, die etwa aus 30 bis 99 Gew.-%, besonders aus 30 bis 95 Gew.-% bzw. 95,1 bis 99 Gew.-%, bevorzugt aus etwa 35 bis 80 Gew.-% bzw. 96 bis 99 Gew.-%, an aromatischen Carbonatstruktureinheiten der Formel (IV), und etwa 70 bis 1 Gew.-%, besonders aus 70 bis 5 Gew.-%, bzw. 4,9 bis 1 Gew.-%, bevorzugt aus etwa 65 bis 20 Gew.-% bzw. 4 bis 1 Gew.-%, an Dimerfettsäureester-Segmenten der Formel (V) oder (VI) bestehen.

Die erfindungsgemäßen hochmolekularen, segmentierten, thermoplastisch verarbeitbaren Polycarbonate zeigen neben der besonderen thermischen Belastbarkeit gute Transparenz, und je nach Weichsegmentanteil hochelastisches Verhalten.

Die erfindungsgemäßen, hochmolekularen Polycarbonate sollen mittlere Molekulargewichte Mw (Gewichtsmittel) von 25000 bis 200000, vorzugsweise von 40000 bis 150000 haben, ermittelt nach der Lichtstreumethode mit dem Streulichtphotometer. Die relativen Lösungsviskositäten $\eta$rel. (gemessen an Lösungen von 0,5 g in 100 ml $CH_2Cl_2$ bei 25°C) der erfindungsgemäßen hochmolekularen Polycarbonate liegen zwischen 1,2 und 3, vorzugsweise zwischen 1,25 und 3, insbesondere zwischen 1,4 und 2,6.

Für die Herstellung der erfindungsgemäßen Polycarbonate können neben den erfindungsgemäß geeigneten Dimerfettsäureestern auch andere einbaufähige "Weichsegmente" mitverwendet werden, wie sie auf Basis von Polyethern, Polyestern, Polyacetalen und Polythioethern in der deutschen Patentanmeldung P 28 37 526 (Le A 18 995), auf Basis von aliphatischen Polycarbonaten in der deutschen Patentanmeldung P 28 27 325 (Le A 18 819), aus Polysiloxanen gemäß US-PS 3 189 662 und DE-OS 2 411 123 und aus C-C-verknüpften Polymerisaten gemäß DE-OS 2 702 626 (Le A 17 356) bereits eingesetzt werden. Auch derartige Polycarbonat-Elastomere gemäß dem Stand der Technik können bereits durch geringe Einkondensation der erfindungsgemäßen Dimerfettsäureesterweichsegmente bezüglich Phasentrennung und Klebneigung wesentlich verbessert werden.

Die erfindungsgemäßen Polycarbonate können auch mit hochmolekularen Polycarbonat-Elastomeren auf Basis von Polyethern, Polyestern, Polysiloxanen, Polythioethern, Polyacetalen, aliphatischen Polycarbonaten und CC-verknüpften Polymerisaten unter Verbesserung von deren Eigenschaften, wie beispielsweise Phasentrennung und vermindertes Kleben, abgemischt werden.

Weiterhin können die erfindungsgemäßen Polycarbonate auch mit anderen Thermoplasten, beispielsweise Bisphenol-A-Polycarbonaten, abgemischt werden. Derartige, als Mischungskomponenten geeignete Polycarbonate haben vorzugsweise ein $\eta_{rel.}$ (gemessen bei 2o°C in $CH_2Cl_2$ bei Konzentrationen von o,5 g/l) zwischen etwa 1,2 und etwa 1,45 und können außer aus dem bereits erwähnten 2,2-Bis-(4-hydroxyphenyl)-propan (Bisphenol A) aus anderen Diphenolen der Formel I in bekannter Weise hergestellt sein.

Die erfindungsgemäßen Polycarbonat-Elastomeren mit mindestens 5 Gew.-% an einkondensiertem Dimerfettsäureester als Weichsegment können neben der Verwendung als Verpackungsmaterialien für biologische



BAD ORIGINAL

Flüssigkeiten und Parenteralia mit Vorteil überall dort angewendet werden, wo eine Kombination von Härte und Elastizität, insbesondere von Kälteflexibilität erwünscht ist, beispielsweise im Karosseriebau, für die Herstellung von Niederdruckreifen für Fahrzeuge, für Ummantelungen von Schläuchen, Platten, Rohren und für flexible Antriebsscheiben.

Die Herstellung der Verpackungsmaterialien aus den erfindungsgemäß geeigneten Polycarbonat-Elastomeren mit mindestens 5 Gew.-% an einkondensierten Dimerfettsäureestern als Weichsegment erfolgt nach bekannten Verarbeitungsmethoden für thermoplastische Polymere, beispielsweise nach dem Extrusionsverfahren bei üblichen Verarbeitungsbedingungen.

Extrudierte Folien können problemlos durch Heißsiegeln, Wärmeimpuls-, Ultraschall- und Hochfrequenzschweißen zu flexiblen Beuteln verarbeitet werden, die nach Füllung und Wasserdampfsterilisation auch die erforderlichen Fallfestigkeitsprüfungen bestehen.

Extrudierte Flachfolien aus dem erfindungsgemäßen Material haben sehr gute optische Eigenschaften



BAD ORIGINAL

(Lichttransmission 90 %, Trübung 2 %), ausgezeichnete mechanische Eigenschaften, (Reißfestigkeit ca. 20 MPa, Reißdehnung ca. 700 %), darüber hinaus gute Kälteflexibilität und extrem niedrige Anteile extrahierbarer Bestandteile.

Die erfindungsgemäßen Polycarbonate mit einkondensierten Dimerfettsäureestern von weniger als etwa 5 Gew.-% sind für Anwendungszwecke einsetzbar, für die die üblichen thermoplastischen Polycarbonate Verwendung finden, beispielsweise als Folien, Platten in der Elektroindustrie. Derartige Fertigteile sind nach den für aromatische Polycarbonate geeigneten Verfahren der Extrusion und des Spritzgusses herstellbar.

Die erfindungsgemäßen Polycarbonate mit einkondensierten Dimerfettsäureestern von weniger als etwa 5 Gew.-% haben gegenüber vergleichbaren thermoplastischen Polycarbonaten ohne einkondensierte Dimerfettsäureester den Vorteil der besseren Kälteschlagfestigkeit und der besseren Entformbarkeit nach der thermoplastischen Verarbeitung.

Die erfindungsgemäßen Polycarbonate mit einkondensierten Dimerfettsäureestern und einem Gehalt an aromatischen Carbonatstruktureinheiten zwischen etwa 30 Gew.-% und 99 Gew.-% können die üblichen in der Technologie der thermoplastischen Polyester und der aromatischen, thermoplastischen Polycarbonate geeigneten Additive wie beispielsweise Ruß, Kieselgur, Kaolin, Tone, $CaF_2$, $CaCO_3$, Aluminiumoxide sowie übliche Glasfasern in Mengen



BAD ORIGINAL

von 2 bis 4 Gew.-%, bezogen jeweils auf das Gesamtgewicht der Formmasse, und anorganische Pigmente sowohl als Füllstoffe als auch als Nucleierungsmittel zugesetzt werden.

Die UV-Stabilität und die Hydrolysestabilität der erfindungsgemäßen aromatischen Polycarbonate mit einkondensierten Dimerfettsäureestern kann verbessert werden durch für thermoplastische Polyester und aromatische Polycarbonate übliche Mengen an UV-Stabilisierungsmitteln wie beispielsweise substituierte "Benzophenone" oder "Benztriazole", durch Hydrolyseschutzmittel, wie beispielsweise Mono- und vor allem Polycarbodiimide, (vgl. W. Neumann, J. Peter, H. Holtschmidt und W. Kallert, Proceeding of the 4th Rubber Technology Conference, London, 22.-25. Mai 1962, S. 738-751) in Mengen von 0,2-5 Gew.-% bezogen auf das Gesamtgewicht der Formmasse, und durch in der Chemie der thermoplastischen Polyester und der aromatischen, thermoplastischen Polycarbonate bekannte Alterungsschutzmittel und Stabilisatoren.

Werden flammwidrige Formmassen gewünscht, können ca. 5 bis 15 Gew.-%, bezogen jeweils auf das Gewicht aromatischer Polycarbonate mit Dimerfettsäureestern, in der Chemie der thermoplastischen Polyester und der aromatischen, thermoplastischen Polycarbonate bekannten Flammschutzmittel, wie z.B. Antimontrioxid, Tetrabromphthalsäureanhydrid, Hexabromcyclododecan, Tetrachlor- oder Tetrabrombisphenol A, oder Tris-(2,3-dichlorpropyl)-phosphat, Tetrachlor- oder Tetrabromphthalimide zugemischt werden, wobei in den Polycarbonatanteilen der erfindungs-



BAD ORIGINAL

gemäßen aromatischen Polycarbonate statistisch einkondensierte Tetrachlor- und Tetrabrombisphenole ebenfalls flammwidrige Eigenschaften zeigen.

Weiterhin können in der Chemie der thermoplastischen Polyester und der thermoplastischen, aromatischen Polycarbonate bekannte Verarbeitungshilfsmittel, wie Trennmittel, in wirksamer Weise verwendet werden.

Die in nachfolgenden Beispielen aufgeführten mittleren Molekulargewichte sind Zahlenmittel Mn und durch Bestimmung der OH-Zahl und Säurezahl ermittelt.

Die Viskosität der präpolymeren Weichsegmente der Beispiele A und B wird in einem Auslaufbecher 4 DIN 53 211 der Fa. Erichsen bei 20° bestimmt.

Die relative Lösungsviskosität $\eta$ rel der Beispiele C 1-9 ist definiert durch die Viskosität von 0,5 g des hochmolekularen Polycarbonats in 100 ml Methylenchlorid bei 25°.

Gelchromatographische Untersuchungen wurden in Tetrahydrofuran mit Styragelsäulen (Trennbereich 1,5 x $10^5$ Å, 1 x $10^5$ Å, 3 - $10^4$ Å und 2 x $10^3$ Å) bei Raumtemperatur durchgeführt.

Zur Bestimmung diente die Eichung von Bisphenol A-Polycarbonat. Es wurden keine großen Abweichungen im Vergleich zu Mw-Bestimmung nach der Lichtstreumethode festgestellt.

Beispiel A 1

Herstellung eines Dimerfettsäurepolyesters mit aliphatischen OH-Endgruppen und einem berechneten Mol.-Gew. von ca. 2000.

20,16 kg (36 Mol) Dimerfettsäure werden mit 5,664 kg (48 Mol) Hexandiol-1,6 vermischt und unter Stickstoff (30 l/h) auf 150° erhitzt. Ab 150° beginnt Kondensationswasser über eine Kolonne abzudestillieren. Die Temperatur wird im Verlauf von 5 h auf 200° gesteigert und weitere 2 h bei dieser Temperatur belassen. Nach Zufügen von 0,258 g $SnCl_2 \cdot 2H_2O$ wird die Stickstoffzufuhr beendet und der Druck im Verlauf von 3 h allmählich auf 50 Torr gesenkt. Nach weiteren 7 h bei 200° und 50 Torr ist die Kondensation beendet.

Es wird ein Öl mit einer OH-Zahl von 57 (ber. 54,9) und einer Säurezahl von 1,9, entsprechend einem mittleren Mol.-Gew. von etwa 1900, erhalten. Die Viskosität dieses Öls in 50 proz. Xylollösung beträgt 19 sec (gemessen in einem Auslaufbecher 4 DIN 53 211).

Beispiel A 2

Herstellung eines Dimerfettsäurepolyesters mit aliphatischen OH-Endgruppen durch azeotrope Veresterung.



BAD ORIGINAL

20,16 kg (36 Mol) Dimerfettsäure, 5,664 kg (48 Mol) Hexandiol-1,6 und 4 kg Xylol werden vermischt und unter Stickstoff und Rühren langsam auf eine Rückflußtemperatur von 180° erhitzt. Innerhalb 6 h kann die Hauptmenge an Kondensationswasser über einen Wasserabscheider abgetrennt werden. Nach Zufügen von 0,258 g $SnCl_2 \cdot 2\ H_2O$ wird noch weiter 8 h am Rückfluß erhitzt, bis das Kondensationswasser völlig abgeschieden ist. Anschließend wird unter vermindertem Druck das gesamte Xylol abdestilliert. Es wird ein Öl mit einer OH-Zahl von 57 ( ber. 54,9) und einer Säurezahl von 1,9, entsprechend einem mittleren Mol.-Gew. von etwa 1900, erhalten. Die Viskosität dieses Öls in 50 proz. Xylollösung beträgt 19 sec.

Beispiel A 3

Herstellung eines Dimerfettsäurepolyesters mit aliphatischen OH-Endgruppen und einem berechneten Mol.-Gew. von ca. 4000.

Gemäß Beispiel A 2 werden 4,368 kg (7,8 Mol) Dimerfettsäure, 1,074 kg (9,1 Mol) Hexandiol-1,6 und 0,85 kg Xylol unter Rühren unter Rückflußtemperatur erhitzt. Nach Zugabe von 0,056 g $SnCl_2 \cdot 2\ H_2O$ wird wie in Beispiel A 2 weiter gearbeitet. Das erhaltene Öl hat eine OH-Zahl von 30 (ber. 28,3) und eine Säurezahl von 1, entsprechend einem mittleren Mol.-Gew. von 3600.



BAD ORIGINAL

Die Viskosität dieses Öls in 50 proz. Xylollösung beträgt 29 sec.

Beispiel A 4

Veresterung von Dimerfettsäure mit einem Überschuß an Hexandiol-1,6.

Gemäß Beispiel A 1 werden 5,6 kg (10 Mol) Dimerfettsäure und 3,54 kg (30 Mol) Hexandiol-1,6 mit 0,092 g $SnCl_2 \cdot 2\ H_2O$ als Katalysator kondensiert.
Das erhaltene Öl hat eine OH-Zahl von 255 (ber. 255) und eine Säurezahl von 2.
Die Viskosität dieses Öls in 50 proz. Xylollösung beträgt 15,8 sec.

Beispiel A 5

Herstellung eines COOH-terminierten Dimerfettsäurepolyesters mit einem berechneten Mol.-Gew. von ca. 3000.

Gemäß Beispiel A 1 werden 3,64 kg (6,5 Mol) Dimerfettsäure und 0,614 kg (5,2 Mol) Hexandiol unter Zugabe von 0,043 g $SnCl_2 \cdot 2\ H_2O$ als Katalysator gemeinsam kondensiert.

Das erhaltene Öl hat eine Säurezahl von 37 (ber. 35,9) und eine OH-Zahl von 1,5 entsprechend einem mittleren Mol.-Gew. von 2910.



BAD ORIGINAL

Die Viskosität dieses Öls in 50 proz. Xylollösung beträgt 15 sec.

Beispiel B 1

Herstellung eines Dimerfettsäure-Hexandiol-Polyesters mit Diphenolcarbonat-Endgruppen des 2,2-Bis-(4-hydroxyphenyl)-propans (Bisphenol A) und einem berechneten Mol.-Gew. von ca. 2500.

9,9 kg (4,84 Mol) Dimerfettsäure-Hexandiol-Polyester aus Beispiel A 1, 2,074 kg (9,68 Mol) Diphenylcarbonat und 2,21 kg (9,68 Mol) Bisphenol A werden in einem Autoklaven vorgelegt. Unter Stickstoffausgleich wird die Mischung bei 100° aufgeschmolzen. In diese Schmelze werden 1,54 ml 40 proz. NaOH (≙ 35 ppm Na ber. auf die Einwaage) als Katalysator zugegeben. Innerhalb 1 h wird nun der Druck langsam auf 1-1,5 Torr gesenkt. Danach wird die Reaktionsmischung innerhalb 1 h auf 150° Innentemp. aufgeheizt, bis das entstehende Phenol abdestilliert. Die Reaktionsmischung wird weitere 2 h bei dieser Temperatur und 1-1,5 Torr so lange behandelt, bis die Hauptmenge an Phenol abgespalten ist. Danach wird ein Vakuum von 0,5 Torr angelegt und weitere 2 h bei 150° kondensiert. Nach Beendigung der Reaktion sind 1793 g Phenol (98,4 % d.Th.) abdestilliert.

Das isolierte Öl hat eine OH-Zahl von 46 (ber. 44) und eine Säurezahl von 1, entsprechend einem mittleren Mol.-Gew. von Mn 2383.



BAD ORIGINAL

Die Viskosität des isolierten Öls in 50 proz. Xylollösung beträgt 70 sec (gemessen in einem Auslaufbecher 4 DIN 53 211).

Beispiel B 2

Herstellung eines Dimerfettsäure-Hexandiol-Polyesters mit Diphenolcarbonat-Endgruppen des Bisphenol A und einem berechneten Mol.-Gew. von ca. 2500.

Analog Beispiel B 1 werden 9,9 kg (4,84 Mol) des Dimerfettsäure-Hexandiol-Polyesters aus Beispiel A 2 (hergestellt durch azeotrope Veresterung), 2,074 kg (9,68 Mol) Diphenylcarbonat, 2,21 kg (9,68 Mol) Bisphenol A und 1,54 ml 40 proz. NaOH zur Reaktion gebracht.

Nach dem Abdestillieren von 1,800 kg (98,8 % d.Th.) Phenol erhält man ein Öl mit einer OH-Zahl von 46 (ber. 44) und einer Säurezahl von 1, entsprechend einem mittleren Mol.-Gew. von Mn 2383.

Die Viskosität dieses Öls beträgt in 50 proz. Xylollösung 70 sec.

Beispiel B 3

Herstellung eines Dimerfettsäure-Hexandiol-Polyesters mit Diphenolcarbonat-Endgruppen des 2,2-Bis-(4-hydroxyphenyl)-propans (Bisphenol A) und einem berechneten Mol.-Gew. von ca. 4400.



BAD ORIGINAL

Analog Beispiel B 1 werden 4,61 kg (1,16 Mol) Dimerfettsäurepolyester aus Beispiel A 3, 0,497 kg (2,32 Mol) Diphenylcarbonat, 0,530 kg (2,32 Mol) Bisphenol A und 0,6 ml 40 proz. NaOH (≙ 35 ppm Na ber. auf die Einwaage) zur Reaktion gebracht. Nach dem Abdestillieren von 421 g Phenol (96,3 % d. Th.) erhält man ein Öl mit einer OH-Zahl von 27 (ber. 25) und einer Säurezahl von 1, entsprechend einem mittleren Mol.-Gew. von Mn = 4000.

Die Viskosität dieses Öls in 50 proz. Xylollösung beträgt 182 sec.

Beispiel B 4

Herstellung eines aliphatischen Polyester-Polycarbonats aus Dimerfettsäure und Hexandiol mit Diphenolcarbonat-Endgruppen und einem berechneten Mol.-Gew. von ca. 3200.

6,24 kg des Gemisches aus Hexandiol-1,6 und Dimerfettsäure-Hexandiol-Ester aus Beispiel A 4, 3,551 kg (16,6 Mol) Diphenylcarbonat, 1,082 kg (4,74 Mol) Bisphenol A und 1,7 ml 40 proz. NaOH (≙ 50 ppm Na ber. auf die Einwaage) werden analog Beispiel B 1 zur Reaktion gebracht. Nach Abspaltung von 3,115 kg Phenol (99,8 % d.Th.) wird ein Öl mit einer OH-Zahl von 35 (ber. 34,3) erhalten, entsprechend einem mittleren Mol.-Gew. von Mn = 3200.

Die Viskosität dieses Öls in 50 proz. Xylollösung beträgt 114 sec.

Beispiel C 1

Herstellung eines hochmolekularen, segmentierten Polycarbonat-Elastomers aus 55 Gew.-% eines Dimerfettsäure-Hexandiol-Polyesters (MG ca. 2000) und 45 Gew.-% Bisphenol A-Polycarbonat.

3,094 kg des Vorprodukts aus Beispiel B 1, gelöst in 30 l Methylenchlorid, werden zu einer Lösung aus 1,265 kg (5,54 Mol) Bisphenol A, 29,89 g p-tert.-Butylphenol, 1,415 kg 45 proz. NaOH und 30 l dest. Wasser gegeben. Innerhalb 25 Min. werden bei 20-25° unter Rühren und Stickstoffatmosphäre 1,181 kg (11,95 Mol) Phosgen eingeleitet. Während des Einleitens werden gleichzeitig 2,22 kg 45 proz. NaOH so zugetropft, daß der pH-Wert konstant bei pH 13 bleibt. Nach dem Phosgen-Einleiten werden 8,05 g Triethylamin zugegeben und 1 h gerührt.

Die organische Phase wird abgetrennt, nacheinander mit 2 proz. Phosphorsäure und schließlich mit dest. Wasser bis zur Elektrolytfreiheit gewaschen. Nach dem Abtrennen des Wassers wird die organische Lösung konzentriert. Die Isolierung des hochmolekularen, segmentierten Polycarbonat-Elastomers erfolgt durch Extrusion im Eindampfextruder bei etwa 230-250° unter den für die Polycarbonatextrusion bekannten Bedingungen.



BAD ORIGINAL

Die analytischen Kennzahlen des Polycarbonat-Elastomers sind: rel. Viskosität (0,5 % in $CH_2Cl_2$) $\eta_{rel}$ = 1,53

Mn 15637

Mw 123626

U 6,91

Eine Differentialthermoanalyse (DTA) dieses Produkts zeigt, daß sowohl beim ersten als auch beim zweiten Aufheizen eine Phasentrennung vom Dimerfettsäure-Hexandiol-Polyester-Weichsegment (Einfriertemperatur -50°) und dem Bisphenol A-Polycarbonat-Hartsegment (Einfriertemp. ca. 135-140°) vorliegt.

Das anfallende Material ist ein geruchloses, rieselfähiges Granulat, das sich zur Weiterverarbeitung - beispielsweise zur Folienextrusion - eignet.

Herstellung und Prüfung von Feinfolien aus den erfindungsgemäßen Polycarbonat-Elastomeren:

Das erhaltene Granulat wurde zwischen 200 und 250°C zu Flachfolien von 200µm Stärke extrudiert.

Optische Messungen an den Extrusionsfolien ergaben Lichttransmissionen bis 90 % und Trübungen von nur 2 %.

| | | |
|---|---|---|
| Reißfestigkeit: | 20 MPa | nach DIN 53504 |
| Reißdehnung: | 700 % | nach DIN 53504 |

Weiterreißfestigkeit nach Graves: 25 kN/m

Aus den Folien wurden mittels Wärmeimpulsschweißung flexible Beutel gefertigt, mit 1 l Wasser gefüllt und der Wasserdampfsterilisation nach DIN 58946, Teil 1, I1e unterzogen. Anschließende Fallfestigkeitsprüfungen nach DIN E 58361, Teil 4 wurden bestanden. Die mit dem erfindungsgemäßen Material hergestellten Folien entsprechen den chemischen Anforderungen an Transfusionsbehältnisse nach DIN E 58361, Teil 4.

Wasserdampfdurchlässigkeit bezogen auf 100µm Stärke: 18 $gm^{-2}d^{-1}$

Die vorliegenden Beutel zeigen eine ausgesprochen gute Kälteflexibilität.

Beispiel C 2

Herstellung eines hochmolekularen, segmentierten Polycarbonat-Elastomers aus 55 Gew.-% eines Dimerfettsäure-Hexandiol-Polyesters (MG ca. 2000 / hergestellt durch azeotrope Veresterung) und 45 Gew.-% Bisphenol A-Polycarbonat.

Aus 3,094 kg des Vorproduktes aus Beispiel B 2, 1,265 kg Bisphenol A, 29,89 g p-tert.-Butylphenol und 1,181 kg Phosgen wird analog Beispiel C 1 ein hochmolekulares Polycarbonat-Elastomer hergestellt, das in den übrigen Eigenschaften dem Produkt



BAD ORIGINAL

aus Beispiel C 1 entspricht. Die rel. Viskosität dieses Produktes beträgt $\eta_{rel}$ = 1,53.

Beispiel C 3

Herstellung eines hochmolekularen Polycarbonat-Elastomers aus 55 Gew.-% eines Dimerfettsäure-Hexandiol-Polyesters (MG ca. 4000) und 45 Gew.-% Bisphenol A-Polycarbonat.

2,794 kg des Vorproduktes aus Beispiel B 3, gelöst in 30 l Methylenchlorid, werden zu einer Lösung von 1,532 kg (6,7 Mol) Bisphenol A, 41,85 g p-tert.-Butylphenol und 1,415 kg 45 proz. NaOH und 30 l dest. Wasser gegeben. Innerhalb 25 Min. werden bei 20-25° unter Rühren und Stickstoffatmosphäre 1,181 kg Phosgen eingeleitet, während der pH-Wert mit 2,22 kg 45 proz. NaOH konstant auf pH 13 gehalten wird. Nach Zugabe von 8,05 g Triethylamin wird wie in Beispiel C 1 aufgearbeitet.

Die analytischen Kennzahlen des Polycarbonat-Elastomers sind: rel. Viskosität (0,5 % in $CH_2Cl_2$) $\eta_{rel}$ = 1,49.

M n 10878

M w 115034

U 9,57

Eine Differentialthermoanalyse dieses Produktes zeigt, daß sowohl beim ersten als auch beim zweiten Aufheizen eine Phasentrennung vom Dimerfettsäure-Hexandiol-Poly-



BAD ORIGINAL

ester-Weichsegment (Einfriertemp. -50°) und dem Hartsegment (Einfriertemp. ca. 135-140°) vorliegt.

Beispiel C 4

Herstellung eines hochmolekularen, segmentierten Polycarbonat-Elastomers aus 55 Gew.-% eines aliphatischen Dimerfettsäureester-Polycarbonats (MG 2600) als Weichsegment und 45 Gew.-% Bisphenol A-Polycarbonat.

3,089 kg des Vorprodukts aus Beispiel B 4, gelöst in 30 l Methylenchlorid, werden zu einer Lösung aus 1,406 kg Bisphenol A, 29,9 g p-tert.-Butylphenol und 1,415 kg 45 proz. NaOH und 30 l dest. Wasser gegeben. Unter Verwendung der gleichen Phosgen-, Natronlauge- und Triethylaminmengen und der Reaktionsbedingungen von Beispiel C 1 wird die Reaktion fortgesetzt.

Die rel. Viskosität des Polycarbonat-Elastomers mit Dimerfettsäureeinheiten beträgt $\eta_{rel}$ = 1,70. Die Differentialthermoanalyse zeigt, daß sowohl beim ersten als auch beim zweiten Aufheizen eine Phasentrennung vom Weichsegment (Einfriertemp. -40°) und dem Hartsegment (Einfriertemp. ca. 130-140°) vorliegt.

Beispiel C 5

Herstellung eines Polycarbonat-Elastomers aus einem carboxylterminierten Dimerfettsäurepolyester (MG ca. 3100) Bisphenol A und Phosgen.



BAD ORIGINAL

Zu einer Lösung aus 10,09 g Bisphenol A, 44,2 ml 2n-NaOH und 130 ml dest. Wasser wird eine Lösung aus 13,75 g des carboxylterminierten Dimerfettsäure-Hexandiol-Polyesters aus Beispiel A 5 und 225 g Methylenchlorid gegeben. Innerhalb 20 Min. werden bei 20-25° unter Rühren und Stickstoffatmosphäre 10,45 g Phosgen eingeleitet, während gleichzeitig 37 g 45 proz. NaOH zur Konstanthaltung von pH 13 zugetropft werden. Nach dem Phosgen-Einleiten werden 7,3 ml einer 1 proz. Triethylamin-Lösung zugegeben und 1 h gerührt. Die organische Phase wird abgetrennt und nacheinander mit dest. Wasser bis zur Elektrolytfreiheit gewaschen. Nach dem Einengen wird in einem Vakuumtrockenschrank 12 h bei 50° und 15 Torr getrocknet.

Die rel. Viskosität des Produktes beträgt $\eta_{rel} = 1,61$.

Beispiel C 6

Herstellung eines Polycarbonat-Elastomers aus dem Bischlorkohlensäureester eines Dimerfettsäurepolyesters, Bisphenol A und Phosgen nach dem Phasengrenzflächenverfahren.

In eine Lösung aus 13,75 g eines Dimerfettsäure-Hexandiol-Polyesters des Beispiels A 1 und 225 g Methylenchlorid werden 4 g Phosgen eingeleitet.



BAD ORIGINAL

Nachdem 5 Min. gerührt wurde, wird eine Lösung aus 10,09 g Bisphenol A, 44,2 ml 2n NaOH, 130 ml dest. Wasser und als Katalysator eine Mischung aus 0,08 g Tributylamin und 0,14 g Tetrabutylammoniumbromid zugegeben. Nach dem Rühren von weiteren 5 Min. werden in die Reaktionsmischung 6,59 g Phosgen innerhalb 15 Min. eingeleitet, während gleichzeitig zur Konstanthaltung von pH 13 27 g 45 proz. NaOH zugetropft werden. Nach dem Phosgen-Einleiten wird noch 1 h gerührt und wie in Beispiel C 5 beschrieben aufgearbeitet. Die rel. Viskosität des Produktes beträgt $\eta_{rel}$ = 1,31.

Analog der Katalysatorkombination aus Tetrabutylammoniumbromid und Triethylamin können auch 4,5 ml einer 1 proz. Triethylaminlösung als Katalysator mit gleich gutem Ergebnis in die Reaktion eingesetzt werden.
Die rel. Viskosität des Produktes beträgt $\eta_{rel}$ = 1,32.

Beispiel C 7

Herstellung eines Polycarbonat-Elastomers aus einem aliphatischen hydroxylterminierten Dimerfettsäurepolyester Bisphenol A und Phosgen nach dem Pyridinverfahren.

10,09 g Bisphenol A werden in 170 g Pyridin unter Stickstoffatmosphäre gelöst. Dazu gibt man eine Lösung aus 13,75 g eines Dimerfettsäure-Hexandiol-Polyesters des Beispiels A 2 und 225 g Methylen-



BAD ORIGINAL

chlorid. In diese Reaktionslösung werden nun innerhalb 20 Min. 5,1 g Phosgen unter Rühren eingeleitet. Das entstandene Reaktionsgemisch wird noch 1 h gerührt. Anschließend wird das sich während der Reaktion gebildete Pyridinhydrochlorid abfiltriert und die organische Phase zweimal mit 10 proz. Salzsäure gewaschen. Danach wird mit dest. Wasser bis zur Elektrolytfreiheit gewaschen. Die Isolierung erfolgt gemäß Beispiel C 5.

Die rel. Viskosität des Polycarbonat-Elastomers beträgt $\eta_{rel}$ = 1,33.

Beispiel C 8

Herstellung eines segmentierten, aromatischen Polycarbonats aus 20 Gew.-% eines Dimerfettsäure-Hexandiol-Polyesters (MG ca. 2000) und 80 Gew.-% Bisphenol A-Polycarbonat.

6,25 g des Vorproduktes aus Beispiel B 1, gelöst in 225 g Methylenchlorid, werden zu einer Lösung aus 16,83 g Bisphenol A, 0,378 g p-tert.-Butylphenol, 78,5 ml 2n NaOH und 90 g dest. Wasser gegeben. Innerhalb 20 Minuten werden bei 20-25°C unter Rühren und Stickstoffatmosphäre 11,7 g Phosgen eingeleitet, während der pH-Wert mit 16 g 45 proz. NaOH konstant auf pH 13 gehalten wird. Nach Zugabe von 8 g einer 1 %igen Triethylamin-Lösung wird noch 1 h gerührt. Die Isolierung des Produktes erfolgt gemäß Beispiel C 5.



BAD ORIGINAL

Die rel. Viskosität des segmentierten, aromatischen Polycarbonats beträgt $\eta$ rel = 1,34.

Die Differentialthermoanalyse zeigt, daß sowohl beim ersten Aufheizen als auch beim zweiten Aufheizen eine Phasentrennung vom Weichsegment (Einfriertemp.-52°C) und dem aromatischen Polycarbonat-Hartsegment (Einfriertemp. 135°C) vorliegt.

Beispiel C 7

Herstellung eines aromatischen Polycarbonats aus 3 Gew.-% eines Dimerfettsäure-Hexandiol-Polyesters (MG ca. 2000) und 97 Gew.-% Bisphenol A-Polycarbonat.

0,94 g des Vorproduktes aus Beispiel B 1, gelöst in 225 g Methylenchlorid, werden zu einer Lösung aus 21,6 g Bisphenol A, 0,458 g p-tert.-Butylphenol, 95 ml 2n NaOH und 75 g dest. Wasser gegeben. Innerhalb 20 Min. werden bei 20-25°C unter Rühren und Stickstoffatmosphäre 14,15 g Phosgen eingeleitet, während der pH-Wert mit 22 g 45 %iger NaOH konstant auf pH 13 gehalten wird. Nach Zugabe von 9,5 g einer 1 %igen Triethylamin-Lösung wird noch 1 h gerührt. Die Isolierung des Produktes erfolgt gemäß Beispiel C 5.

Die rel. Viskosität des aromatischen Polycarbonats beträgt $\eta$ rel = 1,30.



BAD ORIGINAL

Patentansprüche

1. Hochmolekulare, segmentierte, thermoplastisch verarbeitbare, aromatische Polycarbonate mit einem Gehalt an aromatischen Carbonatstruktureinheiten zwischen etwa 30 Gew.-% und 99 Gew.-%, bezogen jeweils auf Gesamtgewicht an Polycarbonat, dadurch gekennzeichnet, daß der jeweils zu 100 Gew.-% komplementäre Gewichtsanteil aus einkondensierten Dimerfettsäureester-Segmenten mit mittleren Molekulargewichten $\bar{M}n$ (Zahlenmittel) zwischen 800 und 20 000 besteht.

2. Hochmolekulare Polycarbonate mit einem Gehalt an aromatischen Carbonatstruktureinheiten von 30 Gew.-% bis 95 Gew.-% gemäß Anspruch 1, dadurch gekennzeichnet, daß der jeweils zu 100 Gew.-% komplementäre Gewichtsanteil aus einkondensierten Dimerfettsäureester-Segmenten mit mittleren Molekulargewichten $\bar{M}n$ (Zahlenmittel) zwischen 800 und 20000 besteht.

3. Hochmolekulare Polycarbonate mit einem Gehalt an aromatischen Carbonatstruktureinheiten von 95,1 Gew.-% bis 99 Gew.-% gemäß Anspruch 1, dadurch gekennzeichnet, daß der jeweils zu 100 Gew.-% komplementäre Gewichtsanteil aus einkondensierten Dimerfettsäureester-Segmenten mit mittleren Molekulargewichten $\bar{M}n$ (Zahlenmittel) zwischen 800 und 20000 besteht.



BAD ORIGINAL

4. Hochmolekulare Polycarbonate mit einem Gehalt an aromatischen Carbonatstruktureinheiten zwischen 35 Gew.-% und 80 Gew.-% gemäß Anspruch 2.

5. Hochmolekulare Polycarbonate mit einem Gehalt an aromatischen Carbonatstruktureinheiten zwischen 96 Gew.-% und 99 Gew.-% gemäß Anspruch 3.

6. Verfahren zur Herstellung der aromatischen Polycarbonate gemäß Ansprüche 1 bis 5, dadurch gekennzeichnet, daß man nach den bekannten Polycarbonat-Herstellungsverfahren in Lösung Diphenole, Kohlensäurehalogenide, gegebenenfalls unter Mitverwendung von Kettenabbrechern und gegebenenfalls unter Mitverwendung von Verzweigern, mit Dimerfettsäureestern mit mittleren Molekulargewichten ($\bar{M}n$) zwischen 800 und 20000, gegebenenfalls nach vorheriger Umwandlung in eine unter den Bedingungen der Polycarbonat-Herstellung einkondensierbare Form, umsetzt.

7. Dimerfettsäureester mit Hydroxyarylcarbonat-Endgruppen der Formel (II)

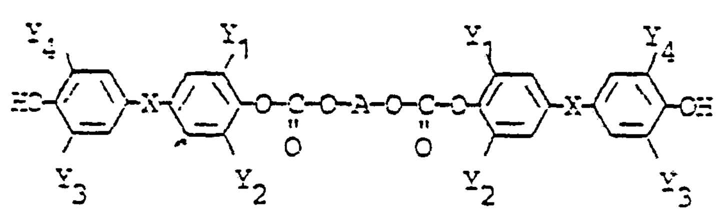

(II),

worin -O-A-O- der bivalente Diolat-Rest von ali-



BAD ORIGINAL

phatisch Hydroxylterminierten Dimerfettsäureestern mit $\bar{M}n$ (Zahlenmittel des Molekulargewichts) von 800 bis 20000 ist,

X eine Einfachbindung, $-CH_2-$, 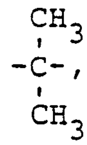 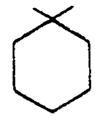 -O-, -S-,

$-SO_2-$ oder 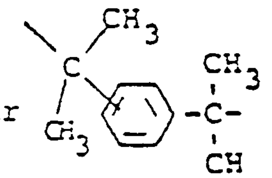 ist und

$Y_1$ bis $Y_4$ gleich oder verschieden sind und Wasserstoff, $C_1$-$C_4$-Alkyl oder Halogen bedeuten.

8. Verwendung der Polycarbonate gemäß Ansprüche 1, 2 und 4 als Verpackungsfolien für biologische Flüssigkeiten und Parenteralia.

9. Verwendung der Polycarbonate gemäß Ansprüche 3 und 5 als Folien, Platten und Formkörper für die Elektroindustrie.

10. Verfahren zur Modifizierung von hochmolekularen, thermoplastischen, aromatischen Polycarbonaten durch Einbau von Weichsegmenten, dadurch gekennzeichnet, daß man Dimerfettsäureesterweichsegmente verwendet.

11. Aromatische, thermoplastisch verarbeitbare, hochmolekulare, segmentierte Polycarbonate, dadurch gekennzeichnet, daß sie mindestens ein Dimerfettsäureester-Weichsegment einkondensiert enthalten.



BAD ORIGINAL

0024672

Nummer der Anmeldung

Europäisches Patentamt

# EUROPÄISCHER RECHERCHENBERICHT

EP 80 10 4913.1

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | US - A - 3 549 570 (COURY)<br>* ganze Schrift *<br>--- | 1-11 | C 08 G 63/62<br>C 08 G 63/64 |
| | KUNSTSTOFFE, Band 62, Nr. 10, 1972 München<br>G. PEILSTÖCKER "Polycarbonate"<br>Seiten 625 bis 627<br>* Seite 626, rechte Spalte, Absatz 3 von unten; Seite 627, linke Spalte, Absatz 1 *<br>---- | 8,9 | |
| | | | RECHERCHIERTE SACHGEBIETE (Int. Cl.3) |
| | | | C 08 G 63/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 27-10-1980 | KRAIL |